# EUROPÄISCHE PATENTSCHRIFT

(11) **EP 0 670 975 B1**
(45) Veröffentlichungstag und Bekanntmachung des Hinweises auf die Patenterteilung: **09.07.1997**
(21) Anmeldenummer: 94901922.8
(22) Anmeldetag: 01.12.1993
(51) Int. Cl.: F16H 61/06

(54) **VERFAHREN ZUR STEUERUNG UND REGELUNG DER LASTÜBERNAHME BEI EINEM AUTOMATISCHEN SCHALTGETRIEBE**
PROCESS FOR CONTROLLING AND REGULATING THE LOAD TAKE-UP IN AN AUTOMATIC GEARBOX
PROCEDE POUR LA COMMANDE ET LA REGULATION DE LA REPRISE DE CHARGE DANS UNE BOITE DE VITESSE AUTOMATIQUE

(30) Priorität: 03.12.1992 DE 4240621
(43) Veröffentlichungstag der Anmeldung: 13.09.1995
(73) Patentinhaber: ZF FRIEDRICHSHAFEN Aktiengesellschaft, 88038 Friedrichshafen (DE)
(72) Erfinder: GRUHLE, Wolf-Dieter, D-88069 Tettnang (DE); SIGG, Peter, D-88045 Friedrichshafen (DE); DEISS, Harald, D-88213 Ravensburg (DE); SCHWAB, Manfred, D-88069 Tettnang (DE); DANZ, Wolfgang, D-88046 Friedrichshafen (DE)
(86) Internationale Anmeldenummer: EP9303357
(87) Internationale Veröffentlichungsnummer: WO9412814

(56) Entgegenhaltungen:
- EP-A- 0 288 779
- EP-A- 0 435 378
- US-A- 4 984 483
- US-A- 5 079 970

## Beschreibung

Die Erfindung betrifft ein Verfahren zur Steuerung und Regelung der Lastübernahme bei einem automatischen Schaltgetriebe nach dem Oberbegriff des ersten Anspruchs.

Bei einem automatischen Schaltgetriebe erfolgt die Lastübernahme während des Schaltvorgangs durch mechanische oder hydraulische Mittel, z. B. einem Freilauf oder Abschaltventil. Eine andere Ausführung der Lastübernahme ist eine Überschneidungsschaltung. Bei dieser Schaltungsart übernimmt eine erste, zuschaltende Kupplung das Moment von einer zweiten, abschaltenden Kupplung. Damit keine Zugkraftunterbrechung auftritt, fällt der Druckaufbau der ersten Kupplung in den Bereich des Abschaltvorgangs der zweiten Kupplung, sie überschneiden sich.

Ein aus der EP-A-0 435 376 bekanntes Verfahren besteht aus einer Schnellfüll-, Drehmoment- und Rutschphase. Während der Schnellfüllphase wird die zuschaltende, erste Kupplung für eine gespeicherte Zeit mit einem hohen Druckniveau gefüllt, so daß die Lamellen anliegen. Während der Drehmomentphase wird die Last von der zweiten auf die erste Kupplung übertragen, wobei die zweite Kupplung noch nicht rutscht. Das Druckniveau der zweiten Kupplung wird hierbei jedoch verringert. Während der Rutschphase wird der Druck der zweiten Kupplung auf Null abgesenkt und der Druck in der ersten Kupplung in einem geschlossenen Steuerkreis in Abhängigkeit der Ist-Übersetzung oder der Eingangsdrehzahl geregelt, bis die Synchrondrehzahl im neuen Gang erreicht ist.

Aus der EP-A-0 288 779 wiederum ist eine Schaltsteuerung bekannt, bei der der Drehmomenttransfer ebenfalls bei eingeleitetem Rutschen, jedoch ohne Schnellfüllung der Kupplungen, geschieht. Während der Rutschphase wird die Drehmomentübertragung derart gesteuert, daß der Druckaufbau der ersten Kupplung und der Druckabbau der zweiten Kupplung mit betraglich gleichen Steigungen ausgeführt werden, sobald eine vorgegebene Überhöhung der Getriebeeingangswelle erreicht ist und eine Zeitlang eingeregelt ist.

Ausgehend vom zuvor beschriebenen Stand der Technik liegt der Erfindung die Aufgabe zugrunde, bei einer Überschneidungsschaltung den Verlauf der zweiten, abschaltenden Kupplung davon abhängig zu machen, in welcher Weise die erste, zuschaltende Kupplung die zu schaltende Last übernimmt.

Die Aufgabe wird erfindungsgemäß durch die kennzeichnenden Merkmale der Ansprüche 1 und 6 gelöst.

Bei einem Regelungsverfahren gemäß Anspruch 1 wird davon ausgegangen, daß der zeitliche Verlauf und der Druckaufbau an einer ersten Kupplung unbekannt sind. Eine zweite Kupplung darf erst dann vollständig öffnen, wenn die erste Kupplung die Last sicher übernehmen kann. Der Grad der Lastübernahme der ersten Kupplung wird aus einer rückgemeldeten Größe abgeleitet. Dazu wird während der Schnellfüllphase der ersten Kupplung das Druckniveau an der zweiten Kupplung abgesenkt, bis sich ein konstanter Schlupfwert einstellt. Über die Veränderung der Regelgröße Kupplungsschlupf bzw. Drehzahldifferenz wird erkannt, zu welchem Zeitpunkt und in welcher Weise die erste Kupplung ein Moment zu übertragen beginnt. Durch den Vergleich einer vorgegebenen Soll-Drehzahldifferenz mit der Ist-Drehzahldifferenz wird in gleichem Maße, wie sich ein Druck an der ersten Kupplung aufbaut, der Druck an der zweiten Kupplung abgesenkt.

Das Regelungsverfahren bietet sich immer dann an, wenn es aufgrund von Störgrößen zu einer zeitlichen Verschiebung des Übernahmepunktes kommt. Störgrößen sind z. B. Toleranzen mechanischer Bauteile und die Temperatur des Druckmediums. Dies führt zu einer größeren Reibbelastung der Kupplungslamellen.

Die zweite erfindungsgemäße Lösung stellt ein Steuerungsverfahren dar. Ein Steuerungsverfahren bietet den Vorteil, daß es Schnelligkeit, einfache Ausführung mit einem hohen Maß an Störsicherheit verbindet. Beim Steuerungsverfahren wird davon ausgegangen, daß der zeitliche Verlauf und der Druckaufbau an einer ersten, zuschaltenden Kupplung bekannt sind, z. B. aus Versuchen. Der tatsächliche Verlauf, der Druckaufbau an der ersten Kupplung und die Druckabsenkung an einer zweiten, abschaltenden Kupplung folgen der gesteuerten Vorgabe. Damit der Lastübernahmepunkt sicher erkannt wird, wird das Druckniveau an der zweiten Kupplung so weit abgesenkt, daß sich eine geringe Drehzahldifferenz an dieser einstellt, z. B. < 10 U/min. Durch den Druckaufbau an der ersten Kupplung beginnt diese, ein Moment zu übertragen, so daß die Drehzahldifferenz kleiner wird. Sinkt diese auf Null, so wird die zweite Kupplung abgeschaltet, da die erste Kupplung die Last vollständig übernommen hat. Der Lastübernahmepunkt, d. h. der Druckwert, an dem das übertragene Moment an der ersten Kupplung größer als an der zweiten Kupplung ist, bleibt konstant.

Beide Lösungen bieten gegenüber dem Stand der Technik den Vorteil, daß die Progressivität des Drehmomenttransfers während der Rutschphase erhöht wird.

Von Vorteil sind Kombinationen beider Verfahren. Bei niederer Temperatur des Druckmediums wird mit dem Regelungsverfahren begonnen. Hat das Druckmedium einen höheren Temperaturbereich erreicht, wird auf das Steuerungsverfahren gewechselt. Es wird immer dann auf das Regelungsverfahren gewechselt, wenn beim Steuerungsverfahren aufgrund der schlechten Befüllung der ersten Kupplung die Drehzahldifferenz anwächst.

Bei beiden Verfahren läßt sich aus dem Wert der Drehzahldifferenz in der elektronischen Getriebesteuerung ein neues Signal generieren. Wenn die Drehzahldifferenz Null oder nahezu Null ist, kann dieses neue Signal z. B. dazu verwendet werden, um in einer elektronischen Motorsteuerung den Zündwinkel zu verändern. Eine Änderung des Zündwinkels in Richtung auf den oberen Totpunkt bewirkt eine Verringerung des Motormoments.
Gegenüber den bisher bekannten Systemen ist von Vorteil, daß die Änderung des Zündwinkels bereits zu dem Zeitpunkt erfolgt, an dem die erste Kupplung ein Moment zu übertragen beginnt.
Eine frühe Motormoment-Reduktion bedeutet, daß die Reibleistung der Kupplung verringert wird und Momentspitzen unterdrückt werden. Dadurch wird eine längere Lebensdauer der Reibbeläge erzielt.

In der Zeichnung sind die Ausführungsbeispiele des Steuerungs- und Regelungsverfahrens dargestellt.

Es zeigen:
- Fig. 1: das Drehzahl-Zeit-Diagramm des Steuerungsverfahrens;
- Fig. 1A: das Druck-Zeit-Diagramm des Steuerungsverfahrens;
- Fig. 2: das Drehzahl-Zeit-Diagramm des Regelungsverfahrens;
- Fig. 2A: das Druck-Zeit-Diagramm des Regelungsverfahrens;
- Fig. 3: als Blockschaltbild den Regelkreis.

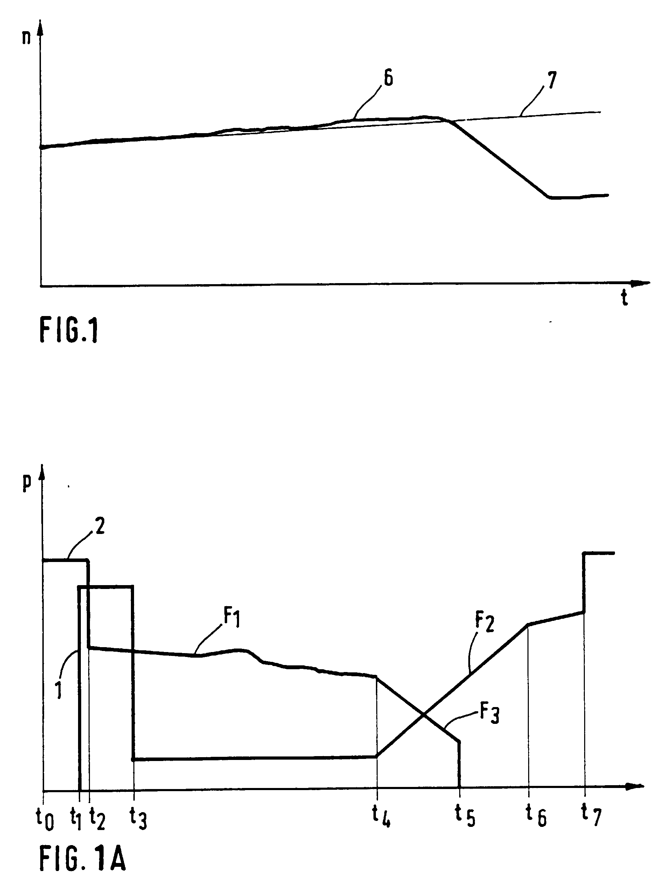

Das Steuerungsverfahren wird anhand der Fig. 1 und 1A erklärt. Dargestellt ist eine Hochschaltung. Der Schaltungsablauf einer zuschaltenden Kupplung 1 besteht aus: Schnellfüllphase, Füllausgleichsphase, Druckaufbaurampe nach einer Zeitfunktion F2 und Übergang auf Maximaldruck.
Der Schaltungsablauf einer abschaltenden Kupplung 2 besteht aus: Übergang vom Maximal- auf Haltedruck, Steuerphase mit einer Zeitfunktion F1, Druckreduktion nach einer Zeitfunktion F3 und dem vollständigen Abschalten.
Die Schaltung beginnt zum Zeitpunkt t0 mit dem Schaltbefehl. Die Kupplung 1 wird im Zeitraum tl bis t3 mit hohem Druck, dem Schnellfülldruck, beaufschlagt. Durch den Schnellfülldruck wird die Kupplung 1 vorgefüllt. Nach der Schnellfüllphase beginnt im Zeitpunkt t3 die Füllausgleichsphase der Kupplung 1. In der Füllausgleichsphase wird die Kupplung 1 mit dem Druckmedium befüllt. Die Füllausgleichsphase ist bei t4 beendet. Im Zeitpunkt t4 liegt ein Kupplungsanlegeelement an den Reibelementen der Kupplung 1 an. Es wird noch kein Moment übertragen.

Während der Schnellfüllphase wird der Druck der Kupplung 2 im Zeitpunkt t2 abgesenkt. Im Zeitraum t2 bis t4 folgt der Druckverlauf der zweiten Kupplung einer ersten Zeitfunktion F1. Der Druck an der Kupplung 2 wird reduziert, bis sich eine geringe Drehzahldifferenz, z. B. < 10 U/min, einstellt. Die Drehzahldifferenz berechnet sich aus der aktuellen Getriebeeingangsdrehzahl 6 minus dem Produkt 7 aus altem Übersetzungsverhältnis mal Getriebeausgangsdrehzahl.

Der Druckaufbau der Kupplung 1 nach einer zweiten Zeitfunktion F2 und der Druckabbau der Kupplung 2 nach einer dritten Zeitfunktion F3 beginnen zeitgleich bei t4. Der Betrag der Druckreduktion an der Kupplung 2 und des Druckaufbaus an der Kupplung 1 sind gleich groß. Im Zeitpunkt t5 sinkt die Drehzahldifferenz auf nahezu Null, da die Kupplung 1 beginnt, ein Moment zu übertragen.

Die Kupplung 1 hat bei t5 die Last vollständig übernommen, der Hydraulikdruck der Kupplung 2 wird auf Null abgesenkt. Die zweite Zeitfunktion F2 der Kupplung 1 ist in t6 beendet und in t7 liegt der Maximaldruck an der Kupplung an.

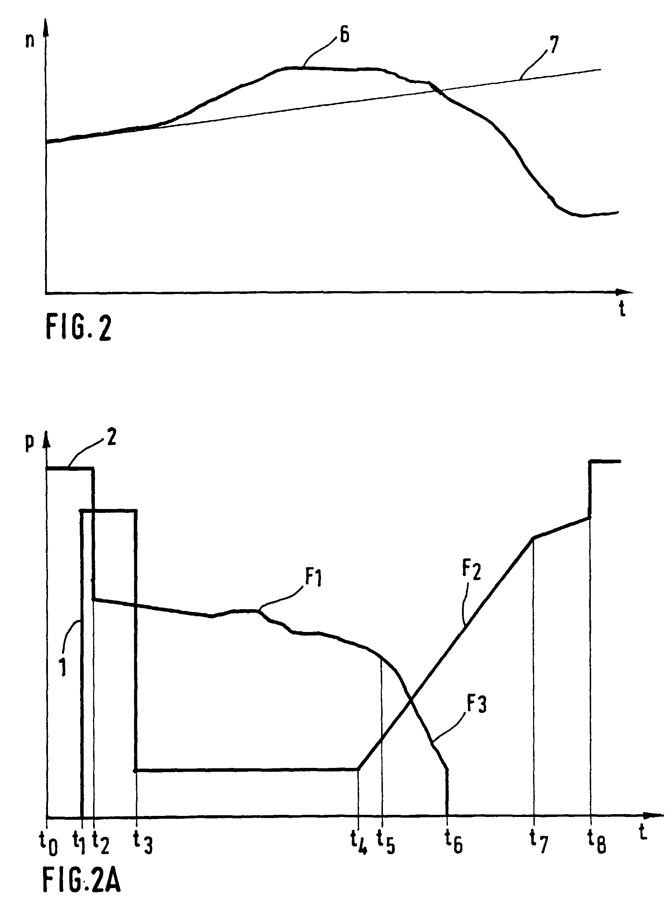

Das Regelungsverfahren wird anhand der Fig. 2 und 2A erklärt. Dargestellt ist eine Hochschaltung. Der Schaltungsablauf der Kupplung 1 besteht aus: Schnellfüllphase, Füllausgleichsphase, Druckaufbaurampe nach einer Zeitfunktion F2 und Übergang auf Maximaldruck.

Der Schaltungsablauf für die Kupplung 2 besteht aus: Übergang vom Maximal- auf Haltedruck, Regelphase mit einer Zeitfunktion F1, Druckreduktion nach einer Zeitfunktion F3 und dem vollständigen Abschalten.
Die Schaltung beginnt zum Zeitpunkt t0 mit dem Schaltbefehl. Die Kupplung 1 wird im Zeitraum tl bis t3 mit hohem Druck, dem Schnellfülldruck, beaufschlagt. Durch den Schnellfülldruck wird die Kupplung 1 vorgefüllt. Nach der Schnellfüllphase beginnt im Zeitpunkt t3 die Füllausgleichsphase der Kupplung 1. In der Füllausgleichsphase wird die Kupplung 1 mit dem Druckmedium befüllt. Die Füllausgleichsphase ist bei t4 beendet. Im Zeitpunkt t4 liegt ein Kupplungsanlegeelement an den Reibelementen der Kupplung 1 an. Es wird noch kein Moment übertragen.

Während der Schnellfüllphase wird der Druck an der Kupplung 2 im Zeitpunkt t2 abgesenkt. Dieser neue Druckwert liegt geringfügig höher als der theoretische Haltedruck. Durch die Druckabsenkung stellt sich an der Kupplung 2 eine geringe Drehzahldifferenz ein. Die Drehzahldifferenz berechnet sich aus der aktuellen Getriebeeingangsdrehzahl 6 minus dem Produkt 7 aus altem Übersetzungsverhältnis mal Getriebeausgangsdrehzahl. Im Zeitpunkt t2 beginnt für die Kupplung 2 eine erste Zeitfunktion F1, durch die Regelung wird der Kupplungsdruck so weit abgesenkt, bis die Drehzahldifferenz einem Sollwert entspricht.

Im Zeitpunkt t4 beginnt die Druckrampe der Kupplung 1. Der Druckaufbau folgt einer zweiten Zeitfunktion F2. Während dieser zweiten Zeitfunktion F2 beginnt die Kupplung 1 aufgrund des Druckniveaus ein Moment zu übertragen. Dadurch nimmt die Drehzahldifferenz ab, Zeitpunkt t5. Der Regler folgt einer Sollwertkennlinie für die Drehzahldifferenz und senkt den Druck an der Kupplung 2 nach einer dritten Zeitfunktion F3 ab. Im Zeitpunkt t6 hat die Kupplung 1 die Last vollständig übernommen, die Drehzahldifferenz ist nahezu Null, so daß der Hydraulikdruck an der Kupplung 2 auf Null abgesenkt wird. Die zweite Zeitfunktion F2 der Kupplung 1 ist im Zeitpunkt t7 beendet, bei t8 steht an der Kupplung 1 der Maximaldruck an. Die Schaltung ist beendet.

In Ausgestaltung der Erfindung wird zum Regelungsverfahren vorgeschlagen, daß die dritte Zeitfunktion F3 der Kupplung 2 maßgeblich durch eine Sonderfunktion bestimmt wird. Die Sonderfunktion wird aktiviert, wenn der Druckaufbau an der Kupplung 1 während der zweiten Zeitfunktion F2, Zeitraum t4 bis t7, zu rasch erfolgt. Dies wird erkannt, wenn die Drehzahldifferenz auf etwa 50 % des Sollwerts abgesunken ist.
Durch diese Sonderfunktion wird verhindert, daß die Kupplung 2 durch zu langsames Regelverhalten wieder schließt. Weiters wird vorgeschlagen, daß der Hydraulikdruck der Kupplung 2 zusätzlich lastabhängig gesteuert wird. Hierdurch wird sichergestellt, daß bei Laständerungen während der Schaltung der Druck der Kupplung 2 der Laständerung gesteuert schnell folgen kann und nicht über große Änderungen der Drehzahldifferenz und damit der Regelabweichung erzeugt wird.

Weitere Vorschläge sind:
- die Einführung einer Sollwertkennlinie für die Drehzahldifferenz, die eine Funktion der Motordrehzahl darstellt;
- eine zeitliche Begrenzung der Rutschphase der Kupplung 2, um die Belastung der Reibelemente zu verringern. Die Rutschphase beginnt im Zeitpunkt t2 mit der Druckabsenkung und endet mit dem vollständigen Abschalten der Kupplung 2;
- die Einführung einer weiteren Sonderfunktion. Die Sonderfunktion wird aktiviert, wenn die Kupplung 1 während der Füllausgleichsphase, t3 bis t4, bereits ein Moment zu übertragen beginnt. Verursacht werden kann dies durch Bauteiltoleranzen. Durch die Sonderfunktion wird der Druck an der Kupplung 2 während der ersten Zeitfunktion F1 verringert.

Beide Verfahren lassen sich miteinander kombinieren:
- temperaturabhängig
   Bei tiefen Temperaturen ist aufgrund der Viskosität des Druckmediums der Füllgrad und die Momentübernahme an der Kupplung 1 unsicher. Daher wird mit dem Regelungsverfahren begonnen. Bei Erreichen der Betriebstemperatur folgt der Druckaufbau an der Kupplung 1 der gesteuerten Vorgabe, es wird auf das Steuerungsverfahren gewechselt;
- ereignisabhängig
   Begonnen wird mit dem Steuerungsverfahren. Wenn aufgrund der unvollständigen Füllung der Kupplung 1 die Drehzahldifferenz sich vergrößert, wird auf das Regelungsverfahren gewechselt. Nach dem Wechsel beginnt dieses mit der ersten Zeitfunktion F1 im Zeitpunkt t2 aus Fig. 2 und 2A.
   Als Ergänzung wird die Einführung einer Lernfunktion vorschlagen. Diese wird immer dann aktiviert, wenn aufgrund einer Zunahme der Drehzahldifferenz vom Steuerungsverfahren auf das Regelungsverfahren gewechselt wird. Die Lernfunktion bewirkt eine schrittweise Verlängerung der Schnellfüllzeit. Dadurch wird die Vorbefüllung der Kupplung 1 verbessert. Die Schnellfüllzeit wird solange erhöht, bis bei der darauffolgenden Schaltung die Füllung der Kupplung 1 der gesteuerten Vorgabe folgt.

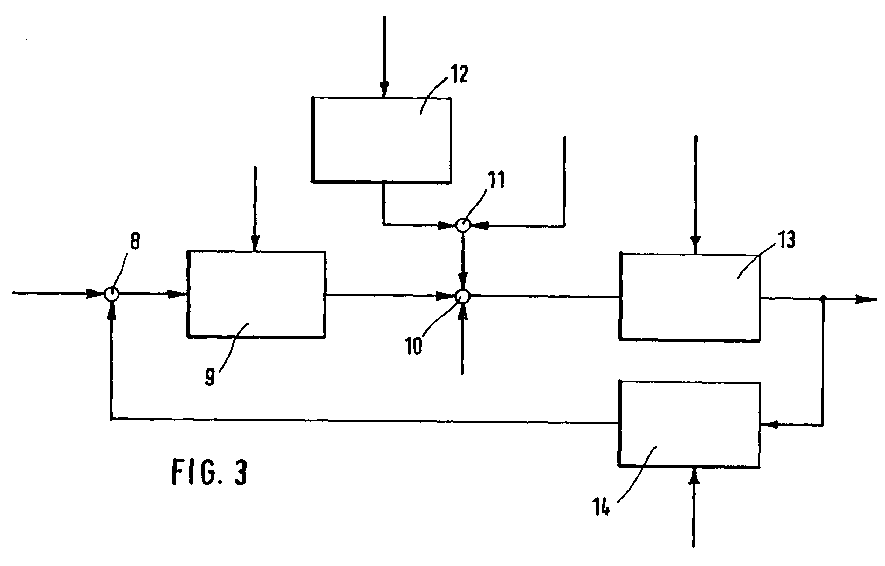

Fig. 3 zeigt einen geschlossenen Regelkreis, bestehend aus einem Regler 9, einem ersten Funktionsblock 12, der Regelstrecke 13 und einem zweiten Funktionsblock 14.

Am Summationspunkt 8 wird ein Vergleich einer Führungsgröße und einer Regelgröße durchgeführt. Die Führungsgröße ist eine Sollwert-Vorgabe der Drehzahldifferenz. Die Regelgröße ist der tatsächliche Drehzahldifferenzwert an der Kupplung 2, der die Ausgangsgröße des zweiten Funktionsblocks 14 ist. Aus dem Vergleich Führungsgröße minus Regelgröße ergibt sich eine Regelabweichung. Die Regelabweichung ist eine Eingangsgröße des Reglers 9. Der Regler 9 stellt in Abhängigkeit der Regelabweichung einen Druckwert, die Stellgröße, ein. Am zweiten Summationspunkt 10 werden die folgenden Druckanteile addiert:
Stellgröße, Druckanteil aus einer Sonderfunktion und der Druckanteil aus dem dritten Summationspunkt 11.
Die Sonderfunktion bewirkt ein sofortiges vollständiges Öffnen der Kupplung 2, wenn die Drehzahldifferenz auf Null oder nahezu Null absinkt. Der dritte Summand des Summationspunkts 10 stellt die Störgröße dar und ist das Ergebnis des dritten Summationspunkts 11. Summationspunkt 11 addiert einen lastabhängigen Druckanteil mit einem Druckanteil, der die Ausgangsgröße des ersten Funktionsblocks 12 ist. Der erste Funktionsblock 12 hat die Aufgabe, einen Druckwert in Abhängigkeit des aktuellen Motormoments einzustellen.
Die Eingangsgrößen für die Regelstrecke 13 sind das Ergebnis des Summationspunkts 10 und einer weiteren Sonderfunktion. Die Kupplung 2 stellt die Regelstrecke 13 dar. Die Sonderfunktion wirkt direkt auf die Regelstrecke ein, wenn die Drehzahldifferenz etwa 50 % der Sollwert-Vorgabe beträgt und verhindert, daß die Kupplung 2 wieder schließt. Eingangsgrößen für den zweiten Funktionsblock 14 sind die beiden Ausgangsgrößen der Regelstrecke, Getriebeeingangs- und -ausgangsdrehzahl und die Übersetzung der Gangstufe vor Beginn der Schaltung. Im zweiten Funktionsblock 14 wird die aktuelle Drehzahldifferenz berechnet. Die Drehzahldifferenz berechnet sich aus der aktuellen Getriebeeingangsdrehzahl 6 minus dem Produkt 7 aus altem Übersetzungsverhältnis mal Ausgangsdrehzahl. Ausgangsgröße des zweiten Funktionsblocks 14 ist der aktuelle Drehzahldifferenzwert an der Kupplung 2 als Regelgröße. Die Regelgröße wird am Summationspunkt 8 mit der Führungsgröße verglichen, der Regelkreis ist geschlossen.

Die Funktion des Regelkreises aus Fig. 3 wird anhand des Druck-Zeit-Diagramms der Fig. 2A erklärt.

Zum Zeitpunkt t0 ist die Drehzahldifferenz Null. Der Vergleich der Führungsgröße und der Regelgröße am Summationspunkt 8 ergibt eine maximale Regelabweichung. Im Zeitpunkt t2 wird der Druck an der Kupplung 2 so weit abgesenkt, daß nach einer nicht dargestellten Initialisierungsphase des Reglers an der Kupplung 2 eine Drehzahldifferenz auftritt. Wird das Motormoment und die Last während der Schaltung nicht geändert, wirkt der Regler auf die Regelstrecke solange ein, bis keine Regelabweichung mehr vorhanden ist, d. h., die tatsächliche Drehzahldifferenz an der Kupplung 2 entspricht einem vorgegebenen Drehzahldifferenzwert. In Fig. 2A ist dies der Zeitbereich t2 bis t5. Nach Ablauf der Füllphase der Kupplung 1 beginnt der Druckaufbau nach einer zweiten Zeitfunktion F2. Bei genügend hohem Druckniveau beginnt die Kupplung 1, ein Moment zu übertragen. Dadurch sinkt die Drehzahldifferenz, was zu einer Regelabweichung und einer Druckabsenung an der Kupplung 2 führt. Eine zu rasche Momentübernahme der Kupplung 1 wird nicht über den Regelkreis ausgeglichen, sondern durch eine gesteuerte Sonderfunktion. Diese Sonderunktion wirkt direkt auf die Kupplung 2 ein und senkt den Druck an dieser nach einer Zeitfunktion F3 ab. Das vollständige Abschalten der Kupplung 2 im Zeitpunkt t6 wird durch eine gesteuerte Sonderfunktion über den zweiten Summationspunkt 10 bewirkt.

### Bezugszeichen

- 1: zuschaltende Kupplung
- 2: abschaltende Kupplung
- 3: erste Zeitfunktion F1
- 4: zweite Zeitfunktion F2
- 5: dritte Zeitfunktion F3
- 6: Getriebeeingangsdrehzahl
- 7: Produkt alter Gangstufe mal Getriebeausgangsdrehzahl
- 8: erster Summationspunkt
- 9: Regler
- 10: zweiter Summationspunkt
- 11: dritter Summationspunkt
- 12: erster Funktionsblock
- 13: Regelstrecke
- 14: zweiter Funktionsblock

## Patentansprüche

1. Verfahren zur elektronischen Steuerung und Regelung eines automatischen Schaltgetriebes mit einem elektronischen Steuergerät, elektronisch gesteuerten oder geregelten Kupplungen, von denen bei mindestens einem Gangwechsel mindestens eine erste Kupplung (1) schließt, während mindestens eine zweite Kupplung (2) öffnet, dadurch **gekennzeichnet,**
daß während einer Schnellfüllphase der ersten Kupplung (1) der Hydraulikdruck der zweiten Kupplung (2) bis kurz oberhalb der Rutschgrenze oder kurz darunter abgesenkt wird,
während der Füllausgleichsphase der ersten Kupplung (1) der Hydraulikdruck der zweiten Kupplung (2) nach einer ersten Zeitfunktion (F1) abgesenkt wird,
nach der Füllausgleichsphase der Hydraulikdruck der ersten Kupplung (1) nach einer zweiten Zeitfunktion (F2) erhöht wird,
während der Hydraulikdruck der zweiten Kupplung (2) mit einer dritten Zeitfunktion (F3) abgesenkt wird, wobei die Steigung dieser dritten Zeitfunktion (F3) betragsmäßig etwa den gleichen Wert hat wie die Steigung der zweiten Zeitfunktion (F2) der ersten Kupplung (1)
und der Hydraulikdruck der zweiten Kupplung (2) auf Null abgesenkt wird, wenn die Eingangsdrehzahl (6) unter einen Wert gleich dem Produkt (7) aus altem Übersetzungsverhältnis mal Ausgangsdrehzahl abfällt, wobei während der ersten Zeitfunktion (F1) der Hydraulikdruck der zweiten Kupplung (2) so geregelt wird, daß eine Drehzahldifferenz, berechnet aus Eingangsdrehzahl(6) minus dem Produkt (7) aus altem Übersetzungsverhältnis mal Ausgangsdrehzahl, nach einer Sollwertkennlinie angestrebt wird und daß die Regelung von einer gesteuerten Sonderfunktion überlagert wird, die die dritte Zeitfunktion (F3) maßgeblich bestimmt, sobald die Drehzahldifferenz um einen bestimmten Betrag, z. B. 50 % vom Sollwert, von diesem abweicht.

2. Verfahren nach Anspruch 1, dadurch **gekennzeichnet**, daß die Sollwertkennlinie eine Funktion einer Motordrehzahl ist.

3. Verfahren nach Anspruch 1, dadurch **gekennzeichnet**, daß der Hydraulikdruck der zweiten Kupplung (2) zusätzlich lastabhängig gesteuert wird.

4. Verfahren nach Anspruch 1, dadurch **gekennzeichnet,** daß ein überhöhter Fülldruck an der ersten Kupplung (1) infolge von Bauteiltoleranzen durch eine erste Zeitfunktion (F1) an der zweiten Kupplung (2) kompensiert wird.

5. Verfahren nach Anspruch 1, dadurch **gekennzeichnet,** daß die Rutschphase der zweiten Kupplung (2) zeitlich begrenzt ist.

6. Verfahren nach dem Oberbegriff von Anspruch 1, dadurch **gekennzeichnet,** daß während einer Schnellfüllphase der ersten Kupplung (1) der Hydraulikdruck der zweiten Kupplung (2) bis kurz oberhalb der Rutschgrenze oder kurz darunter abgesenkt wird,
während der Füllausgleichsphase der ersten Kupplung (1) der Hydraulikdruck der zweiten Kupplung (2) nach einer ersten Zeitfunktion (F1) abgesenkt wird,
nach der Füllausgleichsphase der Hydraulikdruck der ersten Kupplung (1) nach einer zweiten Zeitfunktion (F2) erhöht wird,
während der Hydraulikdruck der zweiten Kupplung (2) mit einer dritten Zeitfunktion (F3) abgesenkt wird, wobei die Steigung dieser dritten Zeitfunktion (F3) betragsmäßig etwa den gleichen Wert hat wie die Steigung der zweiten Zeitfunktion (F2) der ersten Kupplung (1)
und der Hydraulikdruck der zweiten Kupplung (2) auf Null abgesenkt wird, wenn die Eingangsdrehzahl (6) unter einen Wert gleich dem Produkt (7) aus altem Übersetzungsverhältnis mal Ausgangsdrehzahl abfällt, wobei während der ersten Zeitfunktion (F1) der Hydraulikdruck der zweiten Kupplung (2) so gesteuert wird, daß eine sehr kleine Drehzahldifferenz (< 10 U/min) eingestellt wird, so daß die zweite Kupplung (2) praktisch geschlossen ist und daß die Steuerung von einer gesteuerten Sonderfunktion überlagert wird, um die dritte Zeitfunktion (F3) maßgeblich zu bestimmen, wenn nach Ende einer Füllausgleichsphase die zweite Zeitfunktion (F2) der ersten Kupplung (1) startet.

7. Verfahren nach dem Oberbegriff von Anspruch 1, dadurch **gekennzeichnet**, daß unterhalb einer Grenztemperatur das Verfahren nach den Ansprüchen 1, 2, 3, 4 oder 5 und oberhalb dieser Grenze das Verfahren nach Anspruch 6 angewendet wird.

8. Verfahren nach dem Oberbegriff von Anspruch 1, dadurch **gekennzeichnet,** daß, unabhängig von der Temperatur, das Verfahren nach Anspruch 6 verwendet wird und nur dann auf das Verfahren nach den Ansprüchen 1, 2, 3, 4 oder 5 während der Schaltung gewechselt wird, wenn während der dritten Zeitfunktion (F3) die Drehzahldifferenz anwächst, wobei wieder auf die erste Zeitfunktion (F1) der zweiten Kupplung (2) zurückgegangen wird.

9. Verfahren nach Anspruch 8, dadurch **gekennzeichnet,** daß jedesmal, wenn während der dritten Zeitfunktion (F3) die Drehzahldifferenz der zweiten Kupplung (2) anwächst, die Schnellfüllzeit der ersten Kupplung (1) um einen bestimmten Betrag erhöht wird.

10. Verfahren nach Anspruch 1, dadurch **gekennzeichnet**, daß das elektronische Steuergerät eine Information bereitstellt, wenn die Differenz aus Eingangsdrehzahl (6) minus dem Produkt (7) aus altem Übersetzungsverhältnis mal Ausgangsdrehzahl gegen Null geht.

## Claims

1. A method for the electronic open and closed loop control of an automatic change-speed gear with an electronic open loop control device, electronically open or closed loop controlled clutches, of which at least a first clutch (1) closes during at least one gear change, whilst at least one second clutch (2) opens, characterised in that, during a rapid charging phase of the first clutch (1) the hydraulic pressure of the second clutch (2) is reduced to just above or just below the slip threshold, during the charge equalising phase of the first clutch (1) the hydraulic pressure of the second clutch (2) is reduced after a first time function (F1), following the charge equalising phase the hydraulic pressure of the first clutch (1) is increased after a second time function (F2), whilst the hydraulic pressure of the second clutch (2) is reduced with a third time function (F3), the increase of this third time function (F3) having approximately the same value in respect of quantity as the increase in the second time function (F2) of the first clutch (1), and the hydraulic pressure of the second clutch (2) is reduced to zero when the input rotational speed (6) falls below a value equal to the product (7) of the old transmission ratio times the output rotational speed, the hydraulic pressure of the second clutch (2) being controlled in closed loop fashion during the first time function (F1) in such a manner that a rotational speed difference, calculated from the input rotational speed (6) minus the product (7) of the old transmission ratio times the output rotational speed, according to a nominal value characteristic curve is aimed at, and an open loop control special function is superimposed over the closed loop control and decisively determines the third time function (F3) as soon as the rotational speed difference deviates by a given amount, e.g. 50%, from the nominal value.

2. A method according to claim 1, characterised in that the nominal value characteristic curve is a function of an engine rotational speed.

3. A method according to claim 1, characterised in that the hydraulic pressure of the second clutch (2) is additionally controlled in open loop fashion as a function of the load.

4. A method according to claim 1, characterised in that an excessive charging pressure at the first clutch (1) as a result of component tolerances is compensated by a first time function (F1) at the second clutch (2).

5. A method according to claim 1, characterised in that the duration of the slip phase of the second clutch (2) is restricted.

6. A method according to the preamble of claim 1, characterised in that, during a rapid charging phase of the first clutch (1), the hydraulic pressure of the second clutch (2) is reduced to just above or just below the slip phase, during the charge equalising phase of the first clutch (1) the hydraulic pressure of the second clutch (2) is reduced following a first time function (F1), following the charge equalising phase the hydraulic pressure of the first clutch (1) is increased after a second time function (F2), whilst the hydraulic pressure of the second clutch (2) is reduced with a third time function (F3), the increase of this third time function (F3) having approximately the same value in respect of quantity as the increase of the second time function (F2) of the first clutch (1), and the hydraulic pressure of the second clutch (2) being reduced to zero when the input rotational speed (6) falls below a value equal to the product (7) of the old transmission ratio times the output rotational speed, the hydraulic pressure of the second clutch (2) being controlled in open loop fashion during the first time function (F1) in such a manner that a very small rotational speed difference (< 10 U/min) is adjusted, so that the second clutch (2) is practically closed and an open loop control special function is superimposed over the open loop control in order to decisively determine the third time function (F3) when the second time function (F2) of the first clutch (1) begins at the end of a charge equalising phase.

7. A method according to the preamble of claim 1, characterised in that, below a threshold temperature, the method according to claims 1, 2, 3, 4 or 5 is used and above this threshold the method according to claim 6 is used.

8. A method according to the preamble of claim 1, characterised in that, independent of the temperature, the method according to claim 6 is used and a change to the method according to claims 1, 2, 3, 4 or 5 is only made during switching if the rotational speed difference increases during the third time function (F3), a return to the first time function (F1) of the second clutch (2) being effected.

9. A method according to claim 8, characterised in that, each time the rotational speed difference of the second clutch (2) increases during the third time function (F3), the rapid charging time of the first clutch (1) is increased by a given amount.

10. A method according to claim 1, characterised in that the electronic open loop control device prepares information when the difference from the input rotational speed (6) minus the product (7) of the old transmission ratio times the output rotational speed reaches zero.

## Revendications

1. Procédé pour commander électroniquement et réguler une boîte de vitesses automatique avec un appareil de commande électronique, des embrayages commandés ou régulés électroniquement, dont un premier embrayage (1) au moins se ferme lors d'un changement de vitesses, alors qu'au moins un deuxième embrayage (2) s'ouvre, **caractérisé** en ce que,
pendant une phase de remplissage rapide du premier embrayage (1) ,la pression hydraulique du deuxième embrayage (2) est abaissée jusqu'à une valeur à peine supérieure à la limite de patinage ou légèrement inférieure à cette valeur,
pendant la phase de compensation du remplissage du premier embrayage (1), la pression hydraulique du deuxième embrayage (2) est abaissée selon une première fonction (F1) dépendant du temps,
est élevée selon une deuxième fonction (F2) dépendant du temps après la phase de compensation du remplissage du premier embrayage (1),
pendant que la pression hydraulique du deuxième embrayage (2) est abaissée selon une troisième fonction (F3) dépendant du temps, la pente de la troisième fonction (F3) a sensiblement la même valeur que la pente de la deuxième fonction (F2) du premier embrayage (1)
et la pression hydraulique du deuxième embrayage (2) est abaissée à zéro lorsque la vitesse de rotation d'entrée (6) est inférieure à une valeur égale au produit (7) de l'ancien rapport de démultiplication et de la vitesse de rotation de sortie, la pression hydraulique du deuxième embrayage (2) étant régulée pendant l'application de la première fonction (F1) de telle manière qu'une différence de vitesse de rotation calculée comme étant la valeur de la vitesse de rotation d'entrée (6) moins le produit (7) de l'ancien rapport de démultiplication et de la vitesse de rotation de sortie, est déterminée selon une valeur de référence et en ce que la régulation d'une fonction spéciale commandée, qui détermine la troisième fonction (F3), est assurée dès que la différence de vitesse de rotation dérive d'une valeur déterminée, par exemple de 50%, de la valeur de référence.

2. Procédé selon la revendication 1, **caractérisé** en ce que la courbe des valeurs de référence est une fonction de la vitesse de rotation du moteur.

3. Procédé selon la revendication 1, **caractérisé** en ce que la pression hydraulique du deuxième embrayage (2) est en outre commandé en fonction de la charge.

4. Procédé selon la revendication 1, **caractérisé** en ce que l'on compense dans le deuxième embrayage (2) une surpression existant dans le premier embrayage (1) en raison des tolérances de construction au moyen d'une première fonction (F1) dépendant du temps.

5. Procédé selon la revendication 1, **caractérisé** en ce que la phase de patinage du deuxième embrayage (2) est limitée dans le temps.

6. Procédé selon le préambule de la revendication 1, **caractérisé** en ce que pendant une phase de remplissage rapide du premier embrayage (1) ,la pression hydraulique du deuxième embrayage (2) est abaissée jusqu'à une valeur à peine supérieure à la limite de patinage ou légèrement inférieure à cette valeur
pendant la phase de compensation du remplissage du premier embrayage (1), la pression hydraulique du deuxième embrayage (2) est abaissée selon une première fonction (F1) dépendant du temps,
est élevée selon une deuxième fonction (F2) dépendant du temps après la phase de compensation du remplissage du premier embrayage (1),
pendant que la pression hydraulique du deuxième embrayage (2) est abaissée selon une troisième fonction (F3) dépendant du temps, la pente de la troisième fonction (F3) a sensiblement la même valeur que la pente de la deuxième fonction (F2) du premier embrayage (1)
et la pression hydraulique du deuxième embrayage (2) est abaissée à zéro lorsque la vitesse de rotation d'entrée (6) est inférieure à une valeur égale au produit (7) de l'ancien rapport de démultiplication et de la vitesse de rotation de sortie, la pression hydraulique du deuxième embrayage (2) étant commandée de telle manière qu'une différence de vitesse de rotation très faible (< 10 U/min) soit réglée, de telle manière que le deuxième embrayage (2) est pratiquement fermé et que la commande d'une fonction spéciale commandée soit superposée, pour déterminer effectivement la troisième fonction (F3) dépendant du temps, lorsque, à la fin d'une phase de compensation du remplissage la deuxième fonction (F2) dépendant du temps du premier embrayage (1) démarre.

7. Procédé selon le préambule de la revendication 1, **caractérisé** en ce que l'on applique le procédé selon les revendications 1, 2, 3, 4, ou 5 en-dessous d'une température limite et en ce que l'on applique le procédé selon la revendication 6 au-dessus de cette limite.

8. Procédé selon le préambule de la revendication 1, **caractérisé** en ce que l'on applique le procédé selon la revendication 6 indépendamment de la température, et en ce que l'on ne passe au procédé selon les revendications 1, 2, 3, 4 ou 5 pendant le passage de vitesses, que lorsque la différence de vitesses de rotation croît pendant la troisième fonction (F3) dépendant du temps, après quoi on passe à nouveau sur la première fonction (F1) dépendant du temps du deuxième embrayage (2).

9. Procédé selon la revendication 8, **caractérisé** en ce que, chaque fois que la différence de vitesses de rotation du deuxième embrayage (2) augmente pendant la troisième fonction (F3) dépendant du temps, la durée du remplissage rapide du premier embrayage (1) est augmentée d'une période prédéterminée.

10. Procédé selon la revendication 1 **caractérisé** en ce que l'appareil de commande électronique fournit une information chaque fois que la différence de la vitesse de rotation d'entrée (6) moins le produit (7) de l'ancien rapport de démultiplication et de la vitesse de rotation de sortie s'approche de zéro.
